# EUROPEAN PATENT APPLICATION

(11) **EP 1 006 744 A2**
(43) Date of publication of application: **07.06.2000**
(21) Application number: 99402995.7
(22) Date of filing: 01.12.1999
(51) Int. Cl.: H04Q 7/32

(54) **Process and terminal for initiating a protected-access transaction and automatic locking of the terminal**

(30) Priority: 02.12.1998 FR 9815232
(71) Applicant: Mitsubishi Electric France, 92000 Nanterre (FR)
(72) Inventor: Ansquer, Pascal, 35000 Rennes (FR)
(74) Representative: Blot, Philippe Robert Emile

(57) **Abstract**

The invention relates to a process for initiating a protected-access transaction on a telephony network from a telecommunication terminal and the terminal for its implementation.

An access data frame comprising an address number for initiating the transaction is entered by the user from the telecommunication terminal. The access data frame entered comprises, for initiating each protected-access transaction, in addition to the address number, an access code. Upon each entry of an access data frame, the access code contained in the access data frame is compared with a predefined code specific to the telecommunication terminal. The transaction is initiated only if the access code contained in the access data frame is identical to the predefined code.

## Description

The present invention relates to a process for initiating a protected-access transaction on a telephony network from a telecommunication terminal, in which an access data frame comprising an address number for initiating the transaction is entered by the user from the telecommunication terminal.

It relates furthermore to a telecommunication terminal, of the type comprising:
- means for receiving a signal;
- means for transmitting a signal;
- means of entry by the user of an access data frame comprising an address number for initiating a transaction from the telecommunication terminal.

Telecommunication terminals, such as portable mobile telephones, are prey to thieves who, after having stolen them, use them fraudulently to access the network.

These telephones should therefore be provided with protection against fraudulent usage.

Mobile telephones currently include a memory card known as a SIM card, in which the identity of the subscriber is stored.

In the event of the theft of the mobile telephone, the subscriber declares the theft to the telephone operator who suspends the possibility of accessing the network from the stolen telephone.

This method of protection is active only after the possessor of the telephone has discovered the theft and declared the latter to the telephone operator. Hence, the protection lacks reliability.

Moreover, certain mobile telephones require that one or more codes be dialled before they are used. After these codes have been entered, the user can perform as many transactions as they so desire. Accordingly, if the telephone is stolen while the telephone is operational, after the codes have been entered, it is no longer protected and the thief can use the telephone fraudulently to perform as many transactions as they so desire.

The drawback of this solution is that the protection of the telephone is ensured only when the latter is switched off or when the latter is switched on and the codes have not yet been entered.

In practice, mobile telephones are often stolen while they are in the user's hand or pocket. The telephone then being operational, the latter is not protected when it enters the possession of the thief, so that they are able to use it fraudulently.

The purpose of the invention is to provide better protection against fraudulent usage of any stolen telecommunication terminal, by preventing the thief from using the terminal improperly, even if the latter was stolen whilst it was operational.

To this end, the subject of the invention is a process for initiating a protected-access transaction on a telephony network from a telecommunication terminal, in which an access data frame comprising an address number for initiating the transaction is entered by the user from the telecommunication terminal, characterized in that the access data frame entered comprises, for initiating each protected-access transaction, in addition to the address number, an access code, and in that, upon each entry by the user of an access data frame, the access code contained in the access data frame is compared with a predefined code specific to the telecommunication terminal, and the transaction is initiated only if the access code contained in the access data frame is identical to the predefined code specific to the telecommunication terminal.

According to particular embodiments, it comprises one or more of the following characteristics:
- access data frame comprises in succession the address number and then the access code;
- access data frame comprises in succession the access code and then the address number;
- access code is compared with the predefined code before entry of the address number; and
- transaction is initiated after entry of the last character of the access code or of the address number.

The subject of the invention is moreover a telecommunication terminal of the aforementioned type, characterized in that the access data frame comprises, for initiating each protected-access transaction, in addition to the address number, an access code, and in that it comprises means of comparing, upon each entry by the user of an access data frame, the access code contained in the access data frame, with a predefined code specific to the telecommunication terminal, and means for initiating the transaction only if the access code contained in the access data frame is identical to the predefined code specific to the telecommunication terminal.

Its subject is also a telecommunication terminal, of the type comprising:
means for receiving a signal,
means for transmitting a signal, and
activatable means of protection adapted so as to limit the use of the terminal by implementing at least one locked mode which, when it is activated, limits direct access to at least one main function of the terminal and, when it is not activated, permits direct access to the or each main function,
characterized in that the means of protection comprise means for automatic activation of a locked mode of the terminal, in the course of a continuous phase of operation thereof whilst the locked mode is not activated, which means of activation are adapted to activate the locked mode, upon the realization of a predetermined event.

According to particular embodiments:
- means of protection comprise means for activating or deactivating the said means for automatic activation of the locked mode;
- said predetermined event causing the automatic activation of the locked mode is the completion of a predetermined period of time in the course of which the locked mode of the terminal has remained unactivated, without any intervention by the user having taken place on the terminal;
- said predetermined event causing the automatic activation of the locked mode is the exceeding of a predetermined number of attempts to perform a given operation on the said terminal;
- the means of protection comprise a main locked mode and a partial locked mode respectively limiting direct access to a first and a second groups of functions of the terminal, the second group of functions being included in the first group of functions;
- the means of protection are adapted to activate the main locked mode upon the exceeding of a predetermined number of attempts to perform a given operation on the terminal when the partial locked mode is activated;
- the means of protection comprise:
   - memory means for storing a predetermined code;
   - means for entering a code;
   - means for comparing a code entered and said predetermined code; and means for deactivating a locked mode of the terminal if the code entered is identical to the predetermined code; and
- the means of protection comprise:
   - memory means for storing a predetermined code;
   - means for comparing a code entered and the said predetermined code; and
   - means for effecting a function the direct access of which is limited when the locked mode is active, if the code entered is identical to the predetermined code.

The invention will be better understood on reading the description which follows, offered merely by way of example and given with reference to the drawings, in which:

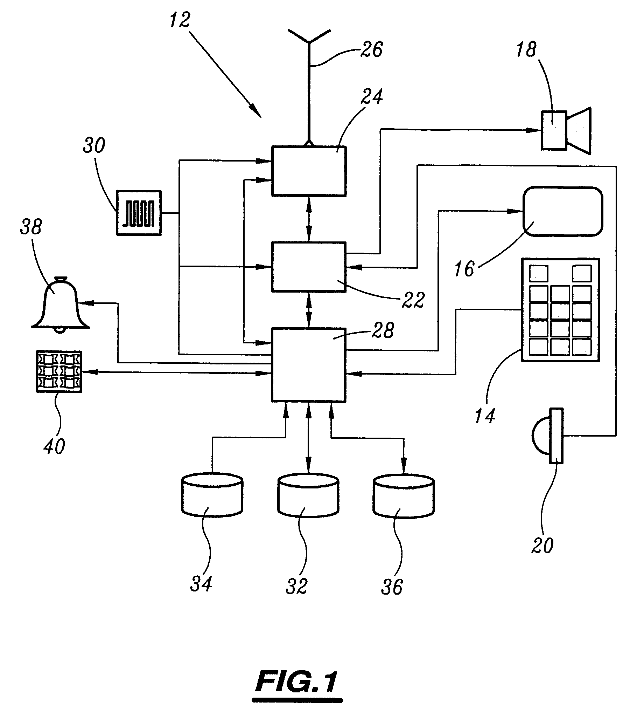

Figure 1 is a diagrammatic view of a mobile telephone according to the invention;
Figure 2 is a flow chart explaining the initiation of a first mode of locking of the mobile telephone, upon powering it up;
Figure 3 is a flow chart explaining the activation of the first mode of locking of the mobile telephone by the user;
Figure 4 is a flow chart explaining the automatic activation of the first mode of locking of the mobile telephone;
Figure 5 is a flow chart explaining the deactivation of the first mode of locking of the mobile telephone by the user;
Figure 6 is a flow chart explaining the initiation of a first mode of automatic locking of the mobile telephone upon powering it up according to a first mode of implementation;
Figure 7 is a flow chart explaining the initiation of the first mode of automatic locking of the mobile telephone upon powering it up according to a second mode of implementation;
Figure 8 is a flow chart explaining the activation of the first mode of automatic locking of the mobile telephone by the user;
Figure 9 is a flow chart explaining the deactivation of the first mode of automatic locking of the mobile telephone by the user;
Figure 10 is a flow chart explaining the automatic activation of the first mode of locking;
Figure 11 is a graph illustrating the accesses to the nonvolatile memory of the telephone as a function of the active mode of protection of the telephone; and
Figures 12 and 13 are flow charts explaining the operation of a second mode of locking of the telephone, in the case of two distinct methods for initiating a transaction over the telephone network.
The mobile telephone 10 represented in Figure 1 is adapted to be used in a mobile telephone network, for example of the GSM type.

It comprises an operating circuit 12, a keypad 14, a display 16, an earpiece 18 and a microphone 20. The earpiece 18 and the microphone 20 are linked to a module 22 for processing audio signals. The latter is adapted, on the one hand, for the conversion of an audio signal emanating from the microphone 20 into a digital signal which can be transmitted over the airwaves, and on the other hand, for the conversion of a digital signal received over the airwaves into an audio signal which can be reproduced by the earpiece 18.

The processing module 22 is linked to a transmission/reception module 24. The latter is linked to an antenna 26 and is adapted, on the one hand, for modulating a digital signal into a radio frequency signal sent to the antenna 26, and on the other hand, for demodulating a radio frequency signal received from the antenna 26 into a digital signal.

The circuit 12 furthermore comprises a central information processing unit 28 to which the keypad 14 and the screen 16 are connected.

A clock signal generator 30 is connected to the modules 22 and 24, as well as to the central information processing unit 28.

The central information processing unit 28 is linked to the modules 22 and 24 so as to control their operation.

A volatile memory 32 and a permanent memory 34 are provided in the operating circuit 12. They are linked to the central information processing unit 28. The permanent memory 34 contains programs for operating the mobile telephone, and especially programs for implementing protection of the latter.

Furthermore, a writeable nonvolatile memory 36 of the EEPROM type is provided in the operating circuit 12 for storing information relating to the state of protection of the telephone.

Finally, a ringer 38 and a subscriber identification card reader 40, of the SIM type, are linked to the central information processing unit 28.

So as to afford protection of the mobile telephone against fraudulent usage, the programs stored in the permanent memory 34 are adapted for implementing two distinct modes of locking of the telephone, in which access to the functions of the telephone is limited.

A main locking mode, designated the "MPN locked mode", prevents the use of all the functions of the telephone with the exception of the keying-in of an unlocking code. A partial locking mode, designated the "DPN locked mode", prevents access to the telephone network initiated by dialling an address number other than an emergency number.

Means, such as a particular key, or else the selecting of a function from a scrolling menu, are provided for activating one or other of the locked modes.

Each of these locked modes can be deactivated by inputting an appropriate code from the keypad 14. These unlocking codes are designated respectively the "MPN code" and "DPN code".

The two locking modes are described in succession in the subsequent part of the description.

The MPN locked mode is supplemented with an MPN automatic locking mode. The latter makes it possible, when it is activated, to switch the telephone automatically from a state in which the MPN locked mode is inactive and in which at least one main function of the telephone is accessible, into a state in which the MPN locked mode is active, this after completion of a predetermined duration in the course of which no action by the user has been performed on the telephone.

Advantageously, the predetermined duration for the automatic locking MPN can be adjusted by the user. The value of this duration is stored in the nonvolatile memory 36 so as not to be affected by turning off the supply to the mobile telephone.

In addition to the MPN locked mode, a mode of blocking of the telephone termed the "MPN blocked mode", is provided.

The MPN blocked mode limits the functions which can be used on the telephone in a manner similar to the MPN locked mode. However, only the distributor of the telephone can deactivate this mode.

The management of the MPN locked mode, of the MPN blocked mode and of the MPN automatic locking mode can be described typically by two finite handlers.

The first finite handler, subsequently designated the "finite handler of MPN protection", has three states denoted by level ZERO of MPN protection, level ONE of MPN protection and level TWO of MPN protection.

The level ZERO of MPN protection corresponds to the case in which the MPN locked mode and the MPN blocked mode are both inactive.

The level ONE of MPN protection corresponds to the case in which the MPN locked mode is active while the MPN blocked mode is inactive.

Finally, the level TWO of MPN protection corresponds to the case in which the MPN locked mode is inactive while the MPN blocked mode is active.

Thus, these three levels of protection are defined by the activation or non-activation of the MPN locked mode and of the MPN blocked mode.

The second finite handler, subsequently designated the "finite handler of MPN automatic locking" possesses two states, namely a first state in which the MPN automatic locking mode is inactive and a second state in which the MPN automatic locking mode is active.

It should be noted that, when only the MPN locked mode is implemented, and when the MPN automatic locking mode is not implemented, then only the first finite handler exists.

When the MPN automatic locking mode exists, the two finite handlers exist. In this case, they share the same memory and each state transition of one of the two finite handlers is a section protected the one with respect to the other, that is to say that it is seen as a unitary indivisible operation. This can be achieved by a semaphore when the two finite handlers are implemented in different operating systems processed by the same processing unit, or on different processing units. This can also be achieved more simply by having the two finite handlers operating on the same processing unit and with the same operating system cooperatively.

The finite handler of MPN protection is firstly initialized and then the finite handler of MPN automatic locking is then initialized alone.

In order to ensure satisfactory protection of the telephone, the activation or deactivation of the MPN automatic locking mode and/or of the MPN locked mode causes the updating of an MPN locked mode indicator stored in the nonvolatile memory 36, to an active state or an inactive state. The MPN locked mode indicator is denoted I_{V}.

Likewise, for the management of the MPN blocked mode, an MPN blocked mode indicator, denoted I_{B}, is stored at an active state or an inactive state in the nonvolatile memory 36, depending on the activation or non-activation of the MPN blocked mode.

Finally, and according to an advantageous embodiment, an MPN automatic locking mode indicator, denoted I_{VA} is also stored in the writeable nonvolatile memory 36 at an active state or an inactive state, depending on the activation or non-activation of the MPN automatic locking mode.

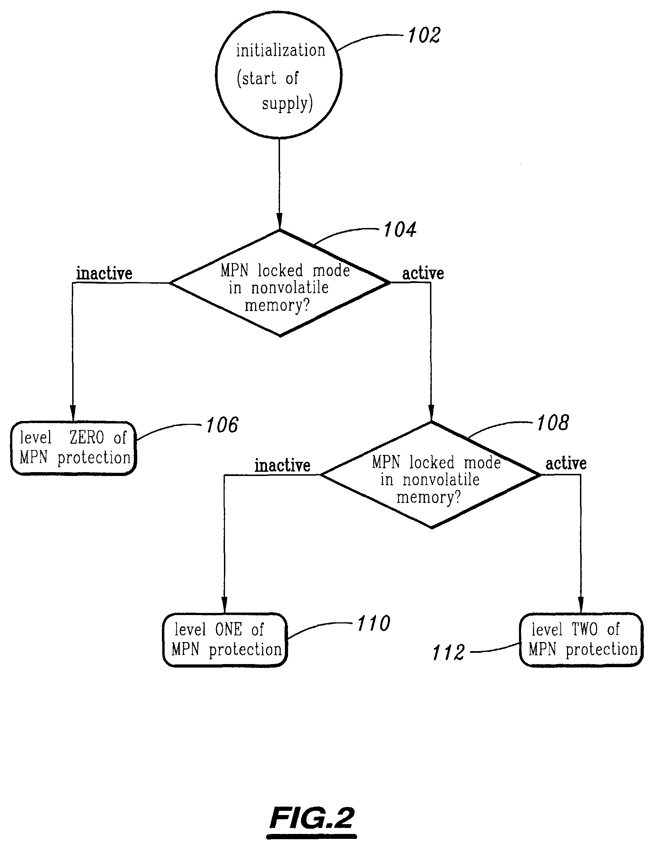

Described in Figures 2, 3, 4 and 5 is the manner of operation of the first finite handler, namely the finite handler of MPN protection in various states of operation of the mobile telephone.

Described in Figure 2 is the initialization of the finite handler of MPN protection. Initialization corresponds, as indicated in step 102, to the steps implemented on powering-up the mobile telephone.

Following power-up, the finite handler of MPN protection verifies, in step 104, the active or inactive state of the MPN locked mode. To this end, it verifies the state of the MPN locked mode indicator I_{V} which is stored in the nonvolatile memory 36.

If this indicator I_{V} is in the inactive state, the level ZERO of MPN protection is established in step 106. If, on the contrary, the MPN locked mode indicator is in the active state, then the state of the MPN blocked mode indicator I_{B} is verified in step 108.

If the latter indicator is in the inactive state, the level ONE of MPN protection is established in step 110. Conversely, if the indicator I_{B} is in the active state, the level TWO of MPN protection is established in step 112.

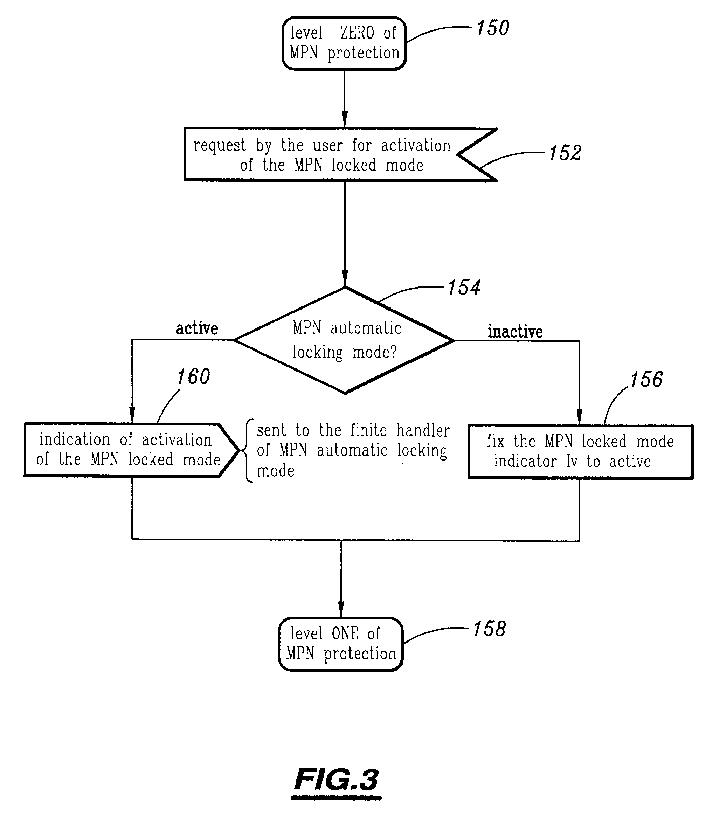

Described in Figure 3 is the mode of activation by the user of the MPN locked mode.

The finite handler of MPN protection is assumed to be, initially, in step 150, at the level ZERO of MPN protection.

Upon a request formulated in step 152 by the user with a view to activating the MPN locked mode, the finite handler verifies in step 154 whether or not the MPN automatic locking mode is active.

If the MPN automatic locking mode is inactive, the MPN locked mode indicator I_{V} is fixed in the active state in step 156. In the subsequent step 158, the level ONE of MPN protection is established.

On the other hand, if, in step 154, the MPN automatic locking mode is detected as being active, before establishing the level ONE of MPN protection, in step 158, an indication of activation of the MPN locking mode is addressed, in step 160, to the finite handler of MPN automatic locking mode.

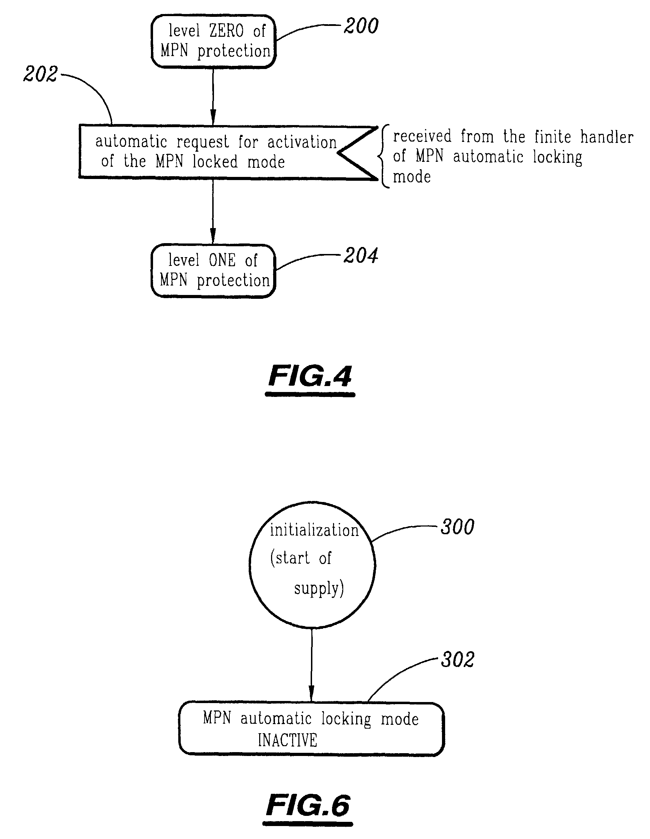

Described in Figure 4 is the automatic activation of the MPN protection mode. It is assumed, in step 200, that the level ZERO of MPN protection is established. When an automatic request for activation of the MPN locked mode is received from the finite handler of MPN automatic locking mode, in step 202, then the level ONE of MPN protection is established, in step 204.

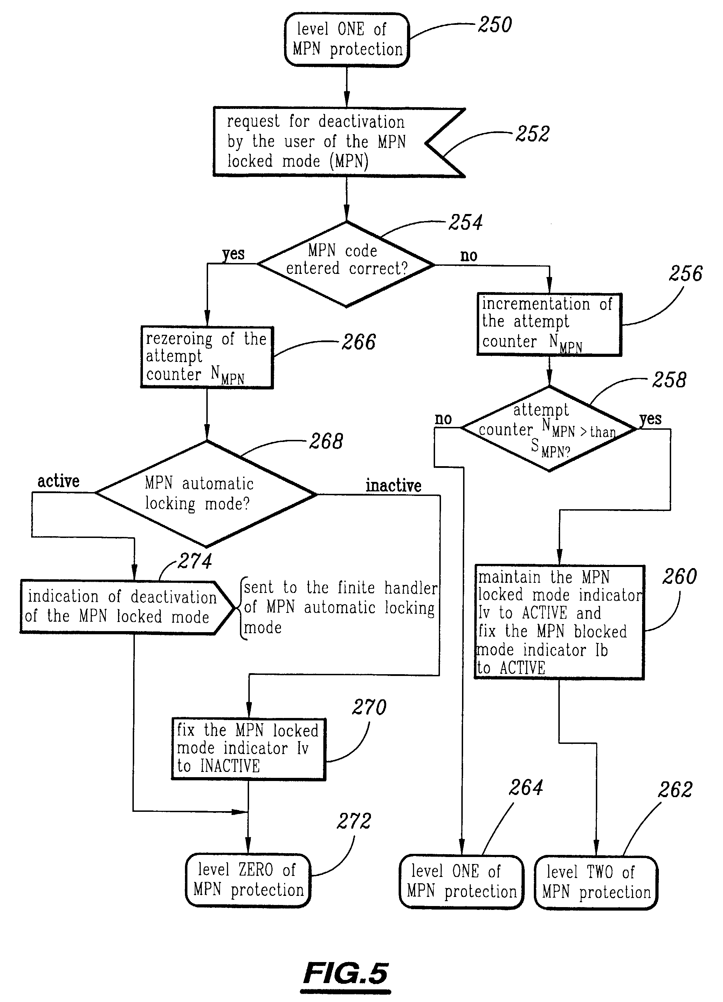

Described in Figure 5 is the deactivation by the user of the MPN protection mode.

In the initial step 250, the level ONE of MPN protection is assumed to be established.

In step 252, the user formulates a request for deactivation of the MPN locked mode, in particular by entering the MPN code.

In step 254, the MPN code entered is compared with the MPN code stored so as to verify whether the MPN code entered is correct or not.

If such is not the case, an attempt counter denoted N_{MPN} is incremented in step 256. The counter N_{MPN} is stored in the writeable nonvolatile memory 36, so as not to be able to be reinitialized simply by interrupting the supply to the mobile telephone.

In step 258, the value of the counter N_{MPN} is compared with a predetermined threshold value S_{MPN}, for example equal to 3.

If the value of the attempt counter N_{MPN} exceeds the value S_{MPN}, the MPN locked mode indicator I_{V} is maintained in the active state, in step 260. In this same step, the MPN blocked mode indicator I_{B} is fixed in the active state. Accordingly, the level TWO of MPN protection is established in step 262.

Conversely, if the value of the attempt counter N_{MPN} is less than the threshold value S_{MPN}, the level ONE of MPN protection is maintained in step 264, allowing the user, during a new step 252, to re-attempt a deactivation of the MPN locked mode by entering the MPN code.

If, in step 254, the MPN code entered is correct, the attempt counter N_{MPN} is rezeroed in step 266.

The state of the MPN automatic locking mode is then verified in step 268.

If the latter is inactive, the MPN locked mode indicator I_{V} is fixed at inactive in step 270. As indicated in step 272, the level ZERO of MPN protection is then established.

Conversely, if, in step 268, the MPN automatic locking mode is detected as being active, before establishing, in step 272, the level ZERO of MPN protection, an indication of deactivation of the MPN locked mode is addressed, in step 274, to the finite handler of MPN automatic locking mode.

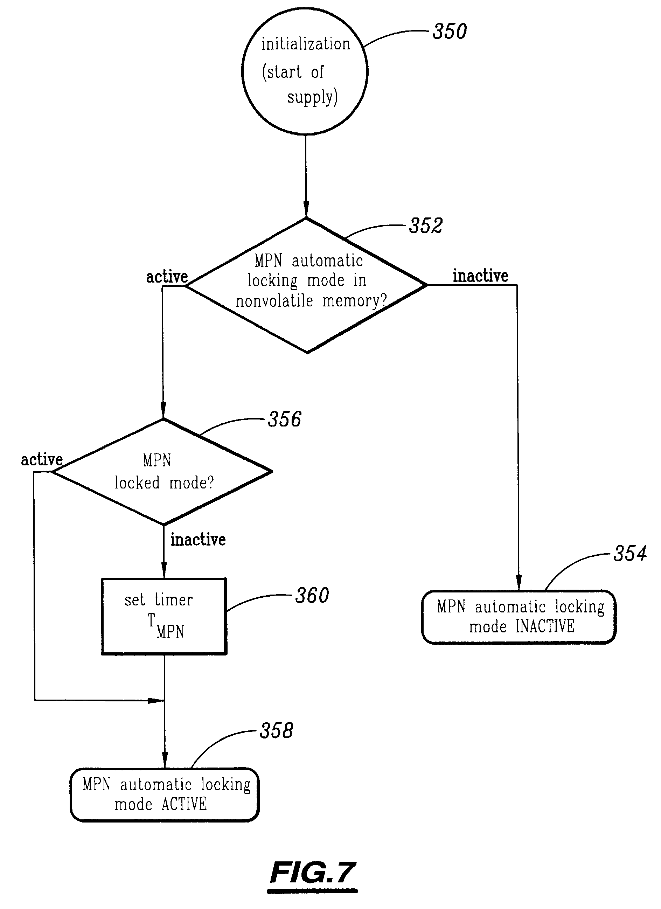

Figures 6, 7, 8, 9 and 10 describe the manner of operation of the second finite handler, namely the finite handler of MPN automatic locking mode, during various phases of operation.

Envisaged in Figure 6 is the phase of powering-up the mobile telephone according to a first mode of implementation. In the latter, the state of the MPN automatic locking mode is not retained in the writeable nonvolatile memory 36. As, in this embodiment, the MPN automatic locking mode indicator I_{VA} is not implemented.

As represented in Figure 6, during initialization, in step 300, of the mobile telephone, that is to say on powering it up, the MPN automatic locking mode is fixed in the inactive state, in step 302. In this embodiment, it is appreciated that switching off the supply to the mobile phone causes the inactivation of the MPN automatic locking mode.

On the other hand, described in Figure 7 is the manner of operation of the finite handler of MPN automatic locking mode during initialization thereof in the case in which the state of the MPN automatic locking mode is retained in the writeable nonvolatile memory 36 by implementing an MPN automatic locking mode indicator I_{VA}.

In this alternative embodiment, on powering-up the mobile telephone, in step 350, the state of the MPN automatic locking mode indicator I_{VA} is determined, in step 352.

If the state of the indicator I_{VA} is inactive, the MPN automatic locking mode is initialized to inactive in step 354.

Conversely, if the indicator I_{VA} is in the active state, the MPN automatic locking mode is activated in step 358, this after having verified in step 356 whether the state of activation of the MPN locked mode is active, and if this is not the case, having implemented step 360 in the course of which a timer denoted T_{MPN} is set.

Generally, and for the entire description, a timer T is a software object known per se which produces a timeout event. One of the aspects of a timer is a default duration D at which it is started. The methods for manipulating a timer are as follows:
- Starting of a timer: creation of an instance of the timer. The start is made at an initial value V which is either given when starting, or implicitly equal to the default duration D of the timer. If the timer is started at the instant t, then the timeout event corresponding to the instance created should occur at the instant t + V. The expiry of the timeout event in fact destroys the timer instance.
- Running timer: a timer is said to be running when it has been started and the timeout event corresponding to startup has not yet expired.
- Timer [instance] stop. This method is applied to a timer instance and destroys it before the corresponding timeout event has expired. When the timer is used with at most one running instance, we speak quite simply of timer stoppage, it being understood that such a software operation is illegal if the timer has no running instance. In the frequent case of timers having at most one instance it is better to use the methods of timer setting and of timer resetting instead of that of starting and stopping.
- Setting of a timer. With regard to a timer being used with at most one instance at a time, setting the timer consists in starting it having previously stopped it if it was running.
- Resetting a timer. With regard to a timer being used with at most one instance at a time, resetting the timer consists in testing whether it is running, and if so, in stopping it.

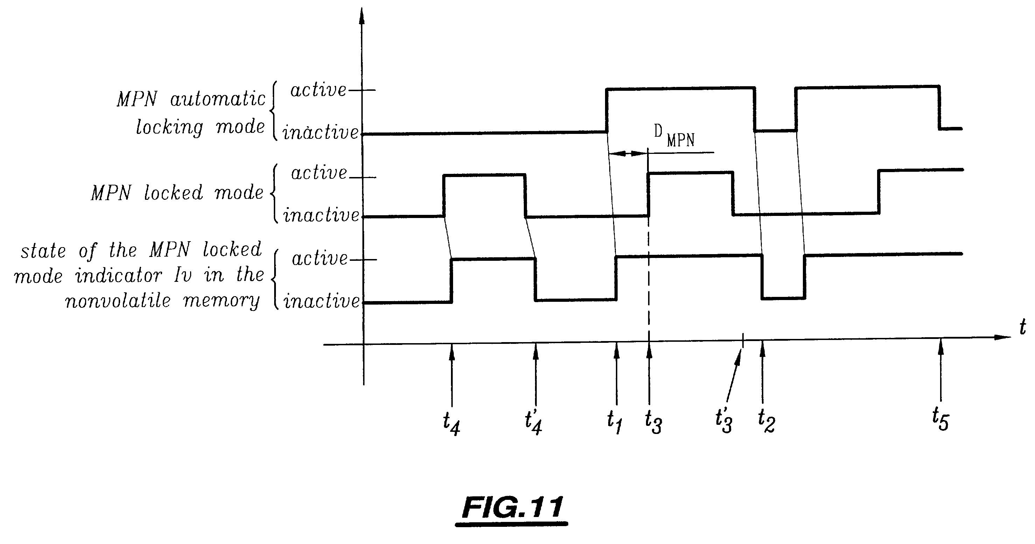

The default duration of the timer T_{MPN} is equal to D_{MPN}, that is to say the duration after which the MPN locked mode is automatically activated if no action is carried out by the user on the mobile telephone. The automatic activation of the MPN locked mode will be described in detail with regard to Figure 11.

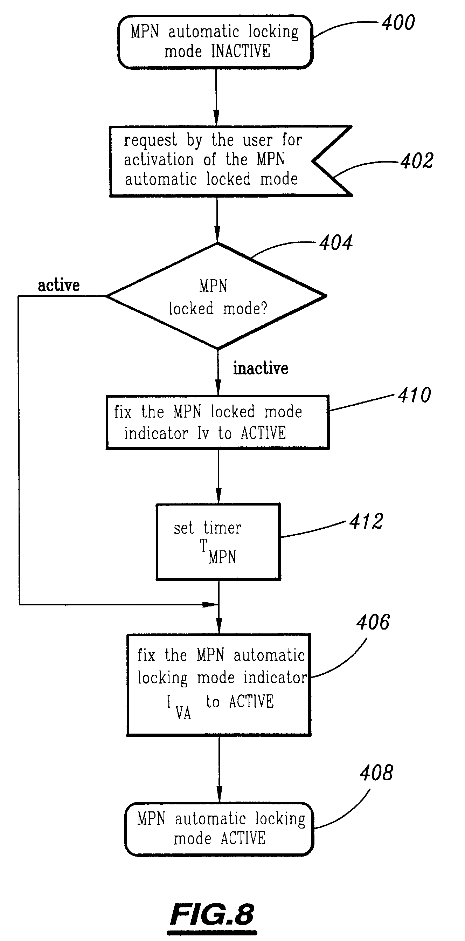

Represented in Figure 8 is the activation of the MPN automatic locking mode by the user.

It is assumed that, in step 400, the MPN automatic locking mode is inactive.

In step 402, the user requests activation of the MPN automatic locking mode.

Following this operation, step 404 determines whether the MPN locked mode is active or inactive.

If the latter is active, the MPN automatic locking mode indicator I_{VA} is fixed in the active state, in step 406. Thus, in step 408, the MPN automatic locking mode is established.

Conversely, if the MPN locked mode is determined as being inactive in step 404, before implementing step 406, the MPN locked mode indicator I_{V} is fixed in the active state, in step 410. In the subsequent step 412, a timer denoted T_{MPN} of duration D_{MPN} is set.

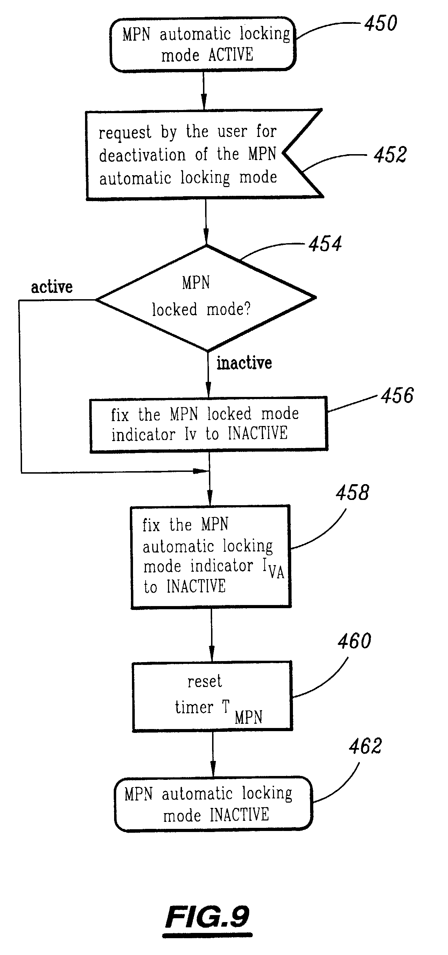

Described in Figure 9 is the deactivation by the user of the MPN automatic locking mode.

In step 450, the MPN automatic locking mode is assumed to be active.

In step 452, the user requests deactivation of the MPN automatic locking mode. Following this request, in step 454, the activity of the MPN locked mode is determined. If the MPN locked mode is inactive, the MPN locked mode indicator I_{V} is fixed at inactive in step 456. Following this step or if the MPN locked mode is determined as being active, in step 454, the MPN automatic locking mode indicator I_{VA} is fixed in the inactive state, in step 458. After this step, the timer T_{MPN} of duration D_{MPN} is reset, in step 460, so that in step 462 the MPN automatic locking mode is inactive.

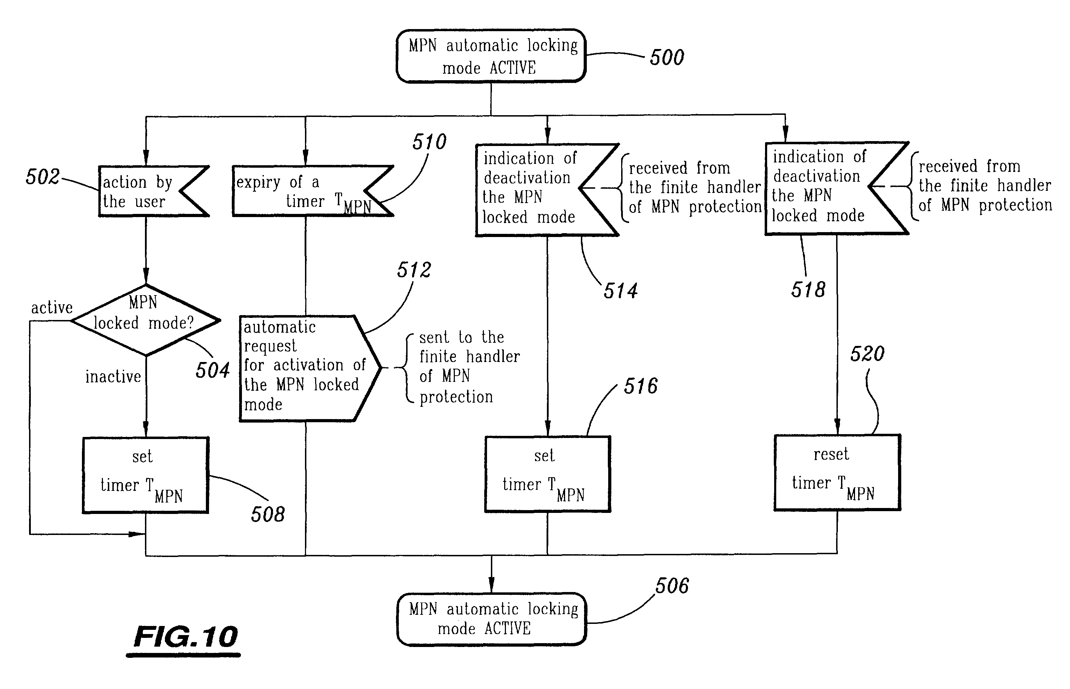

Finally, described in Figure 10 is the automatic activation of the MPN locked mode.

In step 500, the MPN automatic locking mode is assumed to be active.

The detection of any action by the user on the mobile telephone, for example the pressing of any key, is assumed in step 502. Following this detection, the state of the MPN locked mode is determined in step 504. If the latter is active, the MPN automatic locked mode is unchanged and remains active, in step 506.

If, conversely, in step 504, the MPN locked mode is determined as being inactive, a timer T_{MPN} of duration D_{MPN} is set, in step 508.

Upon the expiry of a timer T_{MPN}, as indicated in step 510, an automatic request for activation of the MPN locked mode is sent to the finite handler of MPN protection, in step 512. This sending causes the activation of the MPN locked mode as indicated in step 202 of Figure 4.

As indicated in step 514, in case of reception, from the finite handler of MPN protection, of an indication of deactivation of the MPN locked mode, a timer T_{MPN} of duration D_{MPN} is set, in step 516. The MPN locking mode is then unchanged and remains active, as indicated in step 506. The indication of deactivation of the MPN locked mode is issued for example in step 274 of Figure 5.

Conversely, if, as indicated in step 518, an indication of activation of the MPN locked mode is received from the finite handler of MPN protection, the timer T_{MPN} is reset in step 520, the MPN automatic locking mode being unchanged and remaining active, as indicated in step 506. The indication of activation of the MPN locked mode is issued for example in step 160 of Figure 3.

Illustrated in Figure 11 by the lower curve is the state of the MPN locked mode indicator I_{V} as a function of time for various changes of modes of protection. In this figure, the active or inactive state of the automatic locking mode is represented by the upper curve, whereas the active or inactive state of the MPN locked mode is represented by the middle curve.

As illustrated at the instant t1, when the MPN automatic locking mode is rendered active, the state of the MPN locked mode indicator I_{V} becomes active in the nonvolatile memory 36, even if the MPN locked mode is not active.

At the instant t2, when the MPN automatic locking mode is rendered inactive and the MPN locked mode is not active, then the MPN locked mode indicator is written as inactive to the nonvolatile memory.

At the instant t3, separated from the instant t1 by the duration D_{MPN} which corresponds to the duration of non-use of the telephone after which the latter is automatically switched into MPN locked mode, the automatic activation of the MPN locked mode does not involve updating the state of the MPN locked mode indicator I_{V}. This is because the latter has already been placed in its active state, when activating the MPN automatic locking mode at the instant t1.

Likewise, at the instant t3', corresponding to a deactivation of the MPN locked mode on the initiative of the user, the state of the MPN locked mode indicator I_{V} stored in memory is unchanged and remains active.

Thus, in a general manner, so long as the MPN automatic locking mode is active, any activation or deactivation of the MPN locked mode has no effect on the MPN locked mode indicator I_{V} stored in the nonvolatile memory. This indicator is maintained in the active state.

Conversely, as illustrated at the instants t4 and t4', when the MPN automatic locking mode is inactive, then any activation or deactivation of the MPN locked mode causes an updating of the MPN locked mode indicator I_{V}, its active or inactive state corresponding to the active or inactive state of the MPN locked mode.

At the instant t5, corresponding to a deliberate deactivation of the MPN automatic locking mode by the user, whilst the MPN locked mode is active, for example following the switching off and switching back on of the mobile telephone, the MPN locked mode indicator I_{V} is maintained in its active state.

It is appreciated that with such storage of the indicator I_{V} in the nonvolatile memory 36 as a function of the activation or deactivation of the MPN automatic locking mode and of the MPN locked mode, the following advantages are obtained.

If the MPN automatic locking mode is active and the MPN locked mode is inactive, and if the mobile telephone is switched off, then the MPN locked mode will again be active when the mobile telephone is switched back on. This prevents a fraudulent user from being able to circumvent the protection simply by switching the telephone off and on again.

Moreover, when the MPN automatic locking mode is active, and the MPN locked mode is activated or deactivated, this possibly occurring several times in the course of a sequence of use of the telephone owing to the automatic activation of the MPN locked mode, there is no need to update the MPN locked mode indicator I_{V}. Thus, the number of write-accesses to the nonvolatile memory 36 is limited, thus reducing the rate of saturation of the memory, if the latter is of the EEPROM type.

The DPN locked mode disables the functions allowing access to the network and in particular the initiation of a protected-access transaction by the dialling of a number other than an emergency number.

In a general manner, the number dialled for the initiation of the protected transaction constitutes the address of the service with which the transaction is to be undertaken. It will therefore subsequently be designated the "address number". The address number is entered into the mobile telephone by entering an access data frame comprising the address number associated with additional data corresponding for example to line seizure codes.

The form of the access data frame may vary greatly from one installation to another.

Thus, the implementation of the DPN locked mode depends greatly on the form of the access data frame used in the mobile telephone for initiating a transaction.

Two algorithms of protection by the DPN locked mode will therefore be described in what follows, these corresponding to two distinct forms of access data frames.

In these two alternative implementations of the DPN locked mode, a DPN code, whose length is for example four digits, is used. This code can be modified by the user.

In addition to the DPN code, there is provision for a so-called "dialling access" code referred to as the DAN code. The length of the DAN code is advantageously less than the length of the DPN code and is for example composed of two digits.

Preferably, the DAN code is the prefix of the DPN code, that is to say the first two digits thereof.

When the DPN locked mode is activated or deactivated, a DPN mode indicator is stored respectively in an active or inactive state in the nonvolatile memory 36.

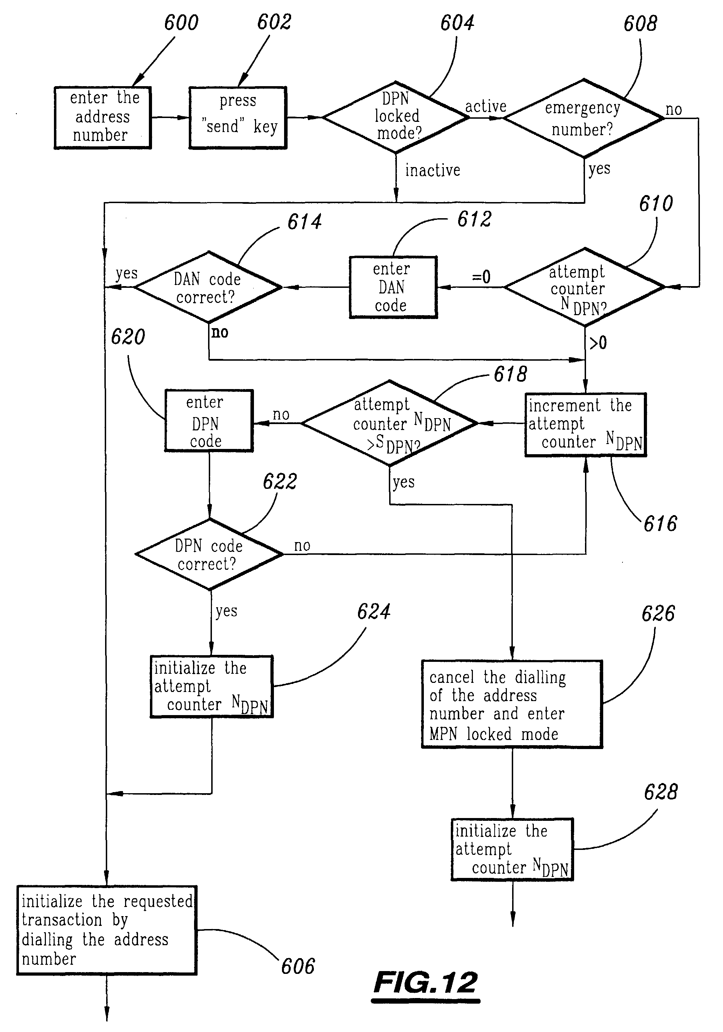

Figure 12 shows diagrammatically the flow chart for implementing the DPN locked mode in the case of a first general method of dialling access data frames comprising, when the DPN locked mode is inactive, the following two steps: firstly the entry of a string of characters constituting the address number, then the sending of this address number, for example by pressing a specific key of the keypad marked SEND.

When the DPN locked mode is active, to allow the initiation of a transaction, the access data frame comprises in succession an address number, the code corresponding to the SEND key and the DAN code.

Thus, with such a method of dialling, any attempt to access the telephone network comprises a first step denoted 600, of dialling the address number, followed by a second 602 of pressing the SEND key.

The DPN locked mode being deactivatable by the user of the telephone by dialling the DPN code, the programme verifies in step 604 whether the DPN locked mode is active. If such is not the case, it initiates, in step 606, the transaction corresponding to the number dialled in step 600.

Conversely, if the DPN locked mode is active, then step 608 first verifies whether the address number corresponds to an emergency number. If such is the case, the transaction corresponding to this emergency number is initiated in step 606.

Conversely, if the address number dialled in step 600 is not an emergency number, the programme determines, in step 610, the value of a counter of attempts to enter the DPN code, denoted N_{DPN}. The value of the counter N_{DPN} is stored with each incrementation in the nonvolatile memory 36.

If the value of the counter N_{DPN} is zero, the algorithm implemented waits, in step 612, for the entry of the DAN code constituting the last element of the access data frame before initiating the requested transaction.

In step 614, the access code entered is compared with the DAN code specific to the relevant mobile telephone and saved in nonvolatile memory.

On the basis of the test performed in step 614, if the DAN code entered is correct, the transaction is initiated in step 606. As soon as the last character of the DAN code has been entered, the transaction is initiated, without it being necessary to validate entry thereof by pressing an additional key. To this end, the complete entry of the DAN code is validated, in step 612, by comparing the number of characters entered with the number of characters constituting the stored DAN code. Thus, access to a service is obtained for the user by entering just the address number, pressing the SEND key, and entering the DAN code in quick succession.

If the DAN code entered is incorrect, the attempt counter N_{DPN} is incremented in step 616. This step 616 of incrementing the attempt counter N_{DPN} is performed directly without any possibility of entering the DAN code, if the attempt counter N_{DPN} is nonzero during the verification performed in step 610.

In step 618, the programme compares the value of the attempt counter N_{DPN} with a predetermined threshold value denoted S_{DPN}, for example fixed at three.

If the value of the counter N_{DPN} is less than S_{DPN}, a message displayed on the display 16 invites, in step 620, the user to enter the DPN code. In step 622, the DPN code entered is compared with the DPN code stored in the nonvolatile memory. If the DPN code entered is correct, the attempt counter N_{DPN} is rezeroed in step 624 and the transaction is initiated in step 606.

Conversely, if the DPN code entered in step 620 is different from the DPN code stored, the attempt counter N_{DPN} is incremented in step 616.

When, during the test performed in step 618, the attempt counter N_{DPN} has a value exceeding the threshold value S_{DPN}, the dialling of the number is cancelled in step 626 and the MPN locked mode is activated. Moreover, in step 628, the attempt counter N_{DPN} is reinitialized.

According to a second general method of dialling the access data frames, the latter are entered, when the DPN locked mode is inactive, by executing the following steps.

An OFF-HOOK key is firstly pressed and then a message is displayed or a sound signal is emitted so as to indicate the possibility of dialling an address number. The address number is then entered by the user, this causing initiation of the transaction, after entry of the last digit of the address number.

When the DPN locked mode is active, for initiation of a transaction, the access data frame comprises in succession the code corresponding to the OFF-HOOK key, the DAN code and the address number.

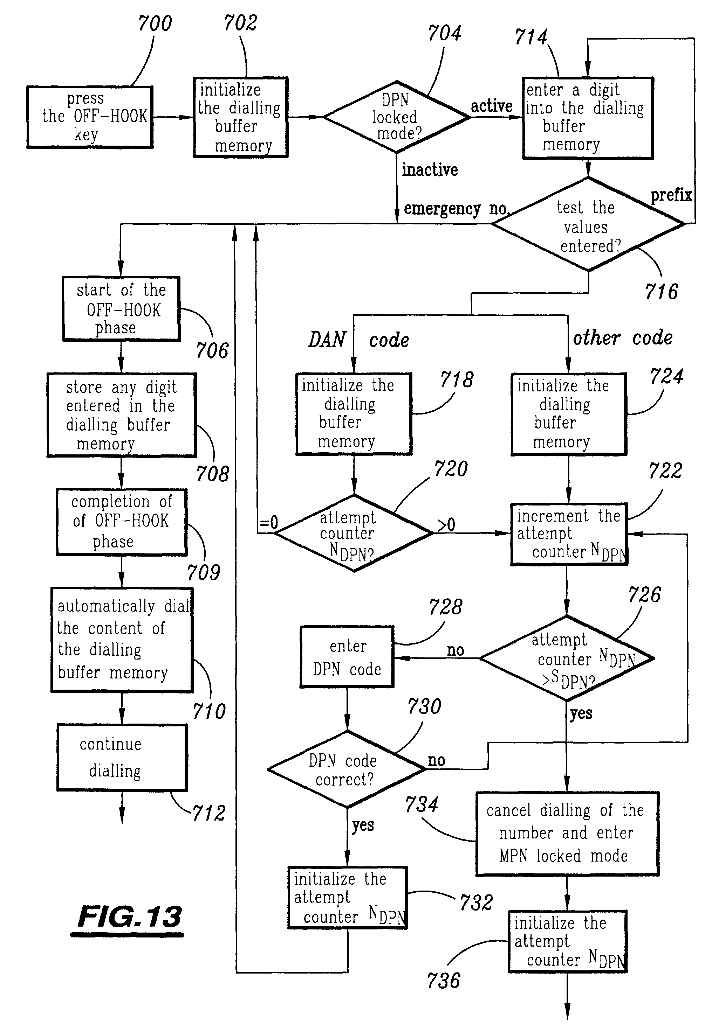

In the case of such a method for dialling the data frames, the implementation of the DPN locked mode is performed as illustrated in Figure 13.

In the initial step 700, the user presses the OFF-HOOK key. The programme then instructs, in step 702, the initializing of a dialling buffer memory in which the digits constituting the access data frame will subsequently be stored.

In step 704, the activity of the DPN locked mode is checked.

If the DPN locked mode is inactive, the user can dial the address number and thus obtain the desired transaction directly. To this end, steps 706 to 712 are implemented.

In a first mode of implementation of the mobile telephone, the OFF-HOOK key has the effect of requesting the establishing of a connection with the network on which the dialling of the address number will be carried out, and of furthermore requesting network resources capable of taking the dialling into account. Step 706 corresponds to access to the network comprising the request for establishing the connection and for allocating resources.

In step 708, the user enters the digits making up the address number. Each of the digits is entered and is stored in buffer memory while the network processes the request.

The subsequent step 709 corresponds to the acknowledgement which is given of the actual establishment of the connection as well as of the allocation of resources for taking the dialling into account.

In step 710, the address number, stored in the dialling buffer memory in step 708 or being entered by the user, is dialled automatically. This dialling continues until completion, in step 712, to establish the transaction.

In a second mode of implementation, the pressing of the OFF-HOOK key has no effect other than to initiate the dialling. Thus, steps 706 and 709 are simultaneous and the intermediate step 708 does not exist.

If the test performed in step 704 reveals that the DPN locked mode is active, the user is invited, in step 714, to enter either an emergency number or an access data frame comprising firstly the DAN code and then the address number.

The first digit entered is stored in the dialling buffer memory. With each new digit entered, the content of the dialling buffer memory is compared, in step 716, with a set of emergency numbers stored in memory, as well as with the stored DAN code. If the current content of the buffer memory is identified as being a prefix in the strict sense of an emergency number or of the DAN code, step 714 is implemented again so as to supplement the content of the buffer memory through the entry of a new digit by the user. The expression "prefix in the strict sense of a first code" designates a second code consisting solely of the first or of the first few digits of the first code, while remaining different from this first code.

If in step 716, an emergency number is identified, steps 706 to 712 are implemented to establish the communication with the emergency service.

If in step 716, the DAN code is identified, the dialling buffer memory is reinitialized in step 718.

In the subsequent step 720, the value of the attempt counter N_{DPN} is analysed. If it is zero, then steps 706 to 712 are implemented. In particular, an address number is entered immediately after the DAN code and the desired transaction is initiated by automatic dialling of the address number.

If the attempt counter N_{DPN} is nonzero during the verification performed in step 720, the attempt counter N_{DPN} is immediately incremented in step 722.

Similarly, if the buffer memory content analyzed in step 716 is not identified as being the prefix in the wide sense, of an emergency number or of the DAN code, the programme initializes, in step 724, the dialling buffer memory and increments, in step 722, the attempt counter N_{DPN}. The expression "prefix in the wide sense of a first code" designates a second code consisting of the first, of the first few digits or of all the digits for the first code.

In step 726, the value of the attempt counter N_{DPN} is compared with a predetermined threshold value S_{DPN}, for example equal to 3. If the value N_{DPN} is less than the predetermined threshold S_{DPN}, the user is invited, in step 728, to enter the DPN code.

In step 730, the DPN code entered is compared with the DPN code stored. If they are identical, the attempt counter N_{DPN} is reinitialized in step 732 and steps 706 to 712 are implemented so as to ensure the initiation of the transaction as a function of an address number dialled on the keypad.

Conversely, if the DPN code entered in step 732 is different from the stored DPN code, step 722 for incrementing the attempt counter N_{DPN} is re-implemented.

After three attempts, the attempt counter N_{DPN} exceeds the predetermined threshold value S_{DPN}, in step 726. Step 734 is then implemented in the course of which the dialling of the address number is cancelled and the MPN locked mode is activated.

In step 736, the attempt counter N_{DPN} is initialized.

After implementing step 734, the user should enter the MPN code so as to be able to reuse the mobile telephone to establish a new communication.

Moreover, the DPN locked mode is supplemented with a DPN automatic unlocking mode which can be activated or deactivated by the user simply by pressing a key on the keypad or by selecting a function from a scrolling menu.

The activity of the DPN automatic unlocking mode is taken into account only when the DPN locked mode is active. If the DPN locked mode is inactive, and if the DPN automatic unlocking mode is active, then the DPN automatic unlocking mode will have no effect and will take effect only when the DPN locked mode is activated.

The DPN automatic unlocking mode ensures that after initiation of a first transaction by entering the DAN or DPN code, the DPN locked mode is temporarily deactivated for a period, termed the DPN automatic deactivation period, in the course of which new transactions can be established without the DAN or DPN code having to be re-entered. The DPN automatic deactivation period commences at the start of the said first transaction, and lasts for as long as there is a transaction initiated by a dialling in progress, or as long as the transaction initiated by dialling still in progress, in the course of the said period, has terminated, the time elapsed since its termination being at least a certain predetermined duration D_{DPN} of this period.

Upon the temporary deactivating of the DPN locked mode, if a usage of the telephone by the user is discovered, the programme implementing the protection checks whether both the DPN locked mode and the DPN automatic unlocking mode are active. If such is the case, the temporary deactivation of the DPN locked mode is maintained for a time span equal to the predetermined duration D_{DPN}. If no action is executed by the operator for the predetermined duration D_{DPN}, the DPN locked mode is automatically reactivated.

In the above paragraph, the terms "usage" and "action" refer respectively to a transaction initiated by dialling a number which is in progress, and to the initiation of a new transaction by dialling a number.

The DPN automatic unlocking mode is managed by the protection programme by the updating of an appropriate flag, denoted F_{DPN}, and of a timer T_{DPN} catering for the detection of the completion of the predetermined duration D_{DPN}.

The flag F_{DPN} is initially fixed at inactive.

When, while the DPN locked mode is active and the DPN automatic unlocking mode is active, a transaction is initiated by dialling a number, then the flag F_{DPN} is fixed at active and the DPN locked mode is deactivated.

It should be noted that the flag F_{DPN} can be active only when the DPN locked mode is inactive. The active state of the flag F_{DPN} signifies that the DPN locked mode is only temporarily inactive, and that automatic reactivation can be effected at a certain instant.

If the DPN locked mode is activated by the user, while the flag F_{DPN} is active, then the flag F_{DPN} is fixed at inactive. If the DPN automatic unlocking mode is deactivated by the user while the flag F_{DPN} is active, then the DPN locked mode is automatically activated and the flag F_{DPN} is fixed at inactive.

Although the flag F_{DPN} is active, the user can still exit the DPN locked mode. The significance of this request is not to exit the DPN locked mode which is already inactive but to reinitialize the flag F_{DPN} so that the DPN locked mode is not automatically reactivated later.

Management of the timer T_{DPN} is as follows.

When the flag F_{DPN} has the active value, whenever a transaction is initiated, the timer T_{DPN} is reset. Whenever a transaction is completed and there is no other transaction in progress, the timer T_{DPN} is set. When the timer T_{DPN} is timed out, the DPN locked mode is automatically activated and the flag F_{DPN} is set to inactive. Whenever the flag F_{DPN} is set to inactive, the timer T_{DPN} is reset.

In order to reduce the rate of saturation of the EEPROM memory constituting the nonvolatile rewriteable memory 36, the re-updating of the DPN mode indicator is advantageously managed as follows. This management of the re-updates constitutes an alternative to the management envisaged earlier and according to which the DPN mode indicator is stored whenever its state is modified.

According to this advantageous mode of management, if the DPN locked mode is deactivated automatically or is reactivated by timeout of the duration D_{DPN}, while the DPN automatic unlocking mode is active, then the DPN mode indicator is not updated in the memory 36.

On the other hand, if the DPN locking mode is activated or deactivated manually by the user, then the DPN mode indicator is updated accordingly in the nonvolatile memory 36.

The advantages resulting from this mode of management of the re-updating of the DPN mode indicator are as follows.

If the DPN automatic unlocking mode is active, and the DPN locked mode is inactive, and if the supply to the telephone is switched off, then the DPN locked mode is activated when the supply to the telephone is re-established.

Furthermore, when the DPN automatic unlocking mode is active, although the DPN locked mode is automatically activated or deactivated, which may occur several times during the same session of usage, it is not necessary to access the rewriteable nonvolatile memory 36 to update the DPN mode indicator. Thus, the number of accesses to the memory 36 is reduced, thereby preserving its lifetime.

Furthermore, the mode of protection described here operates in respect of transactions initiated by dialling an address number on the keypad, but also and similarly for transactions initiated by AT commands received on a suitable interface of the telephone.

It will be understood in a general manner that the MPN locked mode can be activated automatically upon the realization of a predetermined event in the course of a continuous phase of operation of the telephone, while the MPN locked mode is initially deactivated. The predetermined event can be the completion of a predetermined period of time in the course of which the telephone has remained without any intervention by the user having taken place, or else the existence of a large number of attempts to deactivate the DPN locked mode which have failed owing to the inability of the user to enter the required correct code.

Likewise, the DPN locked mode, temporarily deactivated by initiation of a transaction while the DPN automatic unlocking mode is active, is automatically reactivated after the expiry of a period of non-usage of the telephone.

Thus, the automatic activation of a locked mode upon the realization of a predetermined event ensures improved protection of the telephone since the deliberate action of the user is not necessary in order for the telephone to place itself in a locked mode which reduces its possibilities for usage.

The DPN locked mode implementing the DAN access code specific to the telephone demands that, for each transaction, the DAN code be recalled in the data frame required for initiating the transaction. Thus, any new protected-access transaction, that is to say other than access to an emergency service, requires that the user indicate the DAN access code. This reduces the risks of fraudulent usage of the telephone after the theft thereof.

Furthermore, although the DAN access code must be entered upon each first attempt to initiate a transaction, the protocol for using the telephone is made only very slightly more unwieldy since the DAN access code forms an integral part of the data frame entered for initiating the transaction.

## Claims

1. Process for initiating a protected-access transaction on a telephony network from a telecommunication terminal, in which an access data frame comprising an address number for initiating the transaction is entered by the user from the telecommunication terminal, characterized in that the access data frame entered comprises, for initiating each protected-access transaction, in addition to the address number, an access code, and in that, upon each entry by the user of an access data frame, the access code contained in the access data frame is compared with a predefined code specific to the telecommunication terminal, and the transaction is initiated only if the access code contained in the access data frame is identical to the predefined code specific to the telecommunication terminal.

2. Process according to Claim 1, characterized in that the access data frame comprises in succession the address number and then the access code.

3. Process according to Claim 1, characterized in that the access data frame comprises in succession the access code and then the address number.

4. Process according to Claim 3, characterized in that the access code is compared with the predefined code before entry of the address number.

5. Process according to any one of the preceding claims, characterized in that the transaction is initiated after entry of the last character of the access code or of the address number.

6. Telecommunication terminal, of the type comprising:
- means for receiving a signal (20, 24);
- means for transmitting a signal (19, 22);
- means of entry by the user of an access data frame comprising an address number for initiating a transaction from the telecommunication terminal, characterized in that the access data frame comprises, for initiating each protected-access transaction, in addition to the address number, an access code, and in that it comprises means of comparing, upon each entry by the user of an access data frame, the access code contained in the access data frame, with a predefined code specific to the telecommunication terminal, and means for initiating the transaction only if the access code contained in the access data frame is identical to the predefined code specific to the telecommunication terminal.

7. Telecommunication terminal, of the type comprising:
means for receiving a signal (20, 24),
means for transmitting a signal (19, 22), and
activatable means of protection adapted so as to limit the use of the terminal by implementing at least one locked mode which, when it is activated, limits direct access to at least one main function of the terminal and, when it is not activated, permits direct access to the or each main function,
characterized in that the means of protection comprise means (26) for automatic activation of a locked mode of the terminal, in the course of a continuous phase of operation thereof whilst the locked mode is not activated, which means of activation are adapted to activate the locked mode, upon the realization of a predetermined event.

8. Terminal according to Claim 7, characterized in that the means of protection comprise means for activating or deactivating the said means for automatic activation of the locked mode.

9. Terminal according to Claim 7 or 8, characterized in that the said predetermined event causing the automatic activation of the locked mode is the completion of a predetermined period of time in the course of which the locked mode of the terminal has remained unactivated, without any intervention by the user having taken place on the terminal.

10. Terminal according to Claim 7 or 8, characterized in that the said predetermined event causing the automatic activation of the locked mode is the exceeding of a predetermined number of attempts to perform a given operation on the said terminal.

11. Terminal according to any one of Claims 7 to 10, characterized in that the means of protection comprise a main locked mode (MPN) and a partial locked mode (DPN) respectively limiting direct access to a first and a second groups of functions of the terminal, the second group of functions being included in the first group of functions.

12. Terminal according to Claims 10 and 11 taken together, characterized in that the means of protection are adapted to activate the main locked mode (MPN) upon the exceeding of a predetermined number of attempts to perform a given operation on the terminal when the partial locked mode (DPN) is activated.

13. Terminal according to any one of Claims 7 to 12, characterized in that the means of protection comprise:
- memory means (36) for storing a predetermined code;
- means (14) for entering a code;
- means (26) for comparing a code entered and said predetermined code; and
- means (26) for deactivating a locked mode (MPN) of the terminal if the code entered is identical to the predetermined code.

14. Terminal according to any one of Claims 7 to 12, characterized in that the means of protection comprise:
- memory means (36) for storing a predetermined code;
- means (14) for entering a code;
- means (26) for comparing a code entered and the said predetermined code; and
- means (26) for effecting a function the direct access of which is limited when the locked mode (DPN) is active, if the code entered is identical to the predetermined code.
